# EUROPÄISCHE PATENTSCHRIFT

(11) **EP 0 522 261 B1**
(45) Veröffentlichungstag und Bekanntmachung des Hinweises auf die Patenterteilung: **18.01.1995**
(21) Anmeldenummer: 92108052.9
(22) Anmeldetag: 13.05.1992
(51) Int. Cl.: B60H 1/00

(54) **Be- und Entlüftungssystem, insbesondere für einen Omnibus**
Aerating and de-aerating system, in particular for an omnibus
Système d'aération et désaération, en particulier pour un autobus

(30) Priorität: 09.07.1991 DE 4122612
(43) Veröffentlichungstag der Anmeldung: 13.01.1993
(73) Patentinhaber: MERCEDES-BENZ AG, 70327 Stuttgart (DE)
(72) Erfinder: Schanzer, Hans-Peter, Dipl.-Ing., W-7120 Bietigheim-Bissingen (DE); Kalt, Hans-Peter, Dipl.-Ing., W-7036 Schönaich (DE); Lüders, Michael, Dipl.-Ing., W-7046 Gäufelden (DE)

(56) Entgegenhaltungen:
- EP-A- 0 306 073
- EP-A- 0 436 798
- DE-A- 2 814 282
- DE-U- 7 005 223
- GB-A- 2 155 171

## Beschreibung

Die Erfindung betrifft ein Be- und Entlüftungssystem, insbesondere für einen Omnibus, mit einem Lufteinlaßsystem, über das Zuluft einem Fahrgastraum zuführbar ist, die über einen unterhalb des Fahrgastraumes angeordneten Laderaum abströmt, wobei in den Laderaum führende Einlaßöffnungen und aus dem Laderaum führende Auslaßöffnungen für die Abluft vorgesehen sind.

In der DE-A-20 23 879 wird eine Laderaumbelüftung für einen Omnibus beschrieben, bei der über den hohlen Längsträger des Fahrzeugunterbaues Luft in den unterhalb des Fahrgastraumes angeordneten Laderaum geleitet wird. Hierzu sind im Bereich des Laderaumes an dem Längsträger Einlaßöffnungen angeordnet.

Aus der DE-A-28 14 282 ist ein Omnibus bekannt, dessen Laderaum mit Einlässen für Umluft zur Aufrechterhaltung eines Luftüberdrucks innerhalb des Laderaums und mit Auslässen versehen ist, die in den Fahrgastraum führen. Hierbei ist bei einer Ausgestaltung an der vorderen Stirnseite des Laderaums ein Lufteinlaßorgan vorgesehen, das unmittelbar in oder vor dem Laderaum zwischen den Radkästen der Vorderräder angeordnet ist. Von der Frontseite des Fahrzeuges können hierbei Frischluftkanäle zu dem Laderaum bzw. Lufteinlaßorgan geführt sein, wobei mindestens einer der Frischluftkanäle eine Regeklappe aufweist.

In der DE-A-29 08 830 wird ein Reiseomnibus mit sich an beiden Seiten des Fahrgastraumbodens in Längsrichtung erstreckenden Kanälen mit in den Fahrgastraum weisenden Luftaustrittsschlitzen beschrieben. Durch unterhalb des Fahrgastraumbodens angeordnete Fördergebläse sind diese mit Luft beaufschlagbar. Hierbei ist bei einer Ausgestaltung eine Gehäuseschale vorgesehen, die eine Rückschlagklappe zum Ansaugen von Umluft und/oder Frischluft aus dem Laderaum aufweist.

Aus der DE-A-37 09 244 ist eine Rückluftsperre für eine Anlage zur Entlüftung des Innenraumes eines Kraftfahrzeuges bekannt, die mit einer Rückschlagklappe ausgebildet ist. Hierbei ist die Rückschlagklappe an einem Rahmen schwenkbeweglich befestigt, der an einem Lufteinlaß angeordnet ist.

Der Erfindung liegt die Aufgabe zugrunde, ein Be- und Entlüftungssystem der eingangs genannten Art derart weiterzubilden, daß seine Funktionsweise auch bei vollbeladenem Laderaum sichergestellt ist und ein Zuströmen von Luft aus dem Laderaum in den Fahrgastraum vermieden wird.

Zur Lösung dieser Aufgabe wird bei einem gattungsgemäßen Be- und Entlüftungssystem vorgeschlagen, daß den Einlaßöffnungen und/oder den Auslaßöffnungen Luftleitelemente zugeordnet sind, die jeweils eine in Richtung der Abluftströmung öffnende Rückschlagklappe und mindestens ein Abstandselement besitzen, das die Funktion der Rückschlagklappe und der Luftführung bei vollbeladenem Laderaum sicherstellt.

Bei dem erfindungsgemäßen Be- und Entlüftungssystem ist eine direkte Abfuhr der Abluft aus dem Fahrgastraum gewährleistet, da die Abluft aus dem Fahrgastraum über den Laderaum nach außen abströmen kann. Die direkte Abführung der Abluft aus dem Fahrgastraum bewirkt eine Aufheizung des Laderaumes, was wiederum eine Bodenerwärmung des Fahrgastraumes mit sich bringt. Mit den an den in den Laderaum führenden Einlaßöffnungen angeordneten Luftleitelementen, die mit einer Rückschlagklappe versehen sind, wird gewährleistet, daß über die Einlaßöffnungen nur Abluft abströmen kann. Das Zuströmen von Luft aus dem Laderaum wird durch die Rückschlagklappe verhindert. Auch bei vollbeladenem Kofferraum ist die Funktionsfähigkeit der Luftleitelemente gewährleistet, da das hieran angeordnete Abstandselement sowohl die Funktionsfähigkeit der Rückschlagklappe als auch der Luftführung bei vollbeladenem Laderaum sicherstellt. Das in das Innere des Laderaume ragende Abstandselement des Luftleitelements hält die innerhalb des Laderaums angeordneten Gepäckstücke derart auf Abstand, daß einerseits die Rückschlagklappe ausschwenken kann und andererseits die Abluft abströmen kann.

Bei einer vorteilhaften Ausgestaltung der Erfindung wird vorgesehen, daß die Luftleitelemente innerhalb des Laderaumes angeordnet sind. Hierdurch wird erreicht, daß innerhalb des Fahrgastraumes kein Raumbedarf für die erfindungsgemäß vorgesehenen Luftleitelemente erforderlich ist.

Bei einer Ausführungsform der Erfindung ist vorgesehen, daß das mindestens eine Abstandselement als die Rückschlagklappe umfassendes Gehäuse ausgebildet ist, das mit mindestens einer Luftöffnung versehen ist. Ein derartiges Gehäuse stellt einerseits die Funktionsfähigkeit der Rückschlagklappe und andererseits der Luftführung bei vollbeladenem Laderaum sicher. Über eine vorteilhaft an einer Ober- und/oder an einer Unterseite des Gehäuses angeordnete Luftöffnung kann die Abluft ungehindert abströmen. Die in diesem Bereich des Gehäuses angeordneten Luftöffnungen können nicht durch Ladegegenstände versperrt werden.

Bei einer Weiterbildung wird vorgesehen, daß das Gehäuse lösbar an einem Rahmen des Luftleitelementes festgelegt ist, der die Einlaßöffnung oder die Auslaßöffnung umfaßt. Ein derartiger Rahmen, der vorteilhaft aus Kunststoff hergestellt ist, ist im Bereich der Einlaß- oder der Auslaßöffnung des Kofferraumes befestigt. Durch die lösbare Festlegung des Gehäuses an dem Rahmen können insbesondere bei einer Funktionsstörung der Rückschlagklappe leicht Instandsetzungsarbeiten durchgeführt werden.

In Weiterbildung der Erfindung wird vorgesehen, daß der Rahmen mit einem Klappenbereich ausgebildet ist, der mit einem von der Rückschlagklappe verschließbaren Luftdurchlaß versehen ist. Der Öffnungsquerschnitt des Luftdurchlasses wird in der Schließstellung der Rückschlagklappe vollständig abgedeckt.

Hierbei kann vorteilhaft vorgesehen sein, daß der Klappenbereich gegenüber der Vertikalen schräg geneigt ausgebildet ist. Somit liegt die Rückschlagklappe in ihrer Schließstellung in einer gegenüber der Vertikalen geneigten Schräglage. Somit wird durch das Eigengewicht der Rückschlagklappe eine besonders gute Schließwirkung der Rückschlagklappe erreicht.

Eine der Rückschlagklappe oder dem Klappenbereich zugeordnete Dichtung verbessert weiterhin die Schließeigenschaften der Rückschlagklappe. Hierbei kann die Rückschlagklappe mit einer Beflockung versehen sein. Eine derarte Beflockung bringt den weiteren Vorteil mit sich, daß von der Rückschlagklappe keine störenden Geräusche ausgehen.

In weiterer Ausgestaltung wird vorgesehen, daß die Einlaßöffnungen mit einer im Fahrgastraum angeordneten Blende versehen sind. Hierdurch wird eine optische Kaschierung der hinter der Blende liegenden Einlaßöffnungen zum Laderaum erreicht. Es kann hierbei vorgesehen sein, daß die Blende mit einem in Fahrzeuglängsrichtung verlaufenden Längsschlitz ausgebildet ist. Über den Längsschlitz strömt die Abluft aus dem Fahrgastraum über die Luftleitelemente in den Laderaum ab.

Die Herstellung und Montage einer derartigen Blende wird besonders einfach, wenn die Blende als mehrteiliges Profilteil ausgebildet ist, das mit Halteelementen im Podestbereich des Fahrgastraumes befestigt ist.

Weitere Merkmale der Erfindung ergeben sich aus einem in der Zeichnung dargestellten Ausführungsbeispiel, das nachfolgend beschrieben wird. Es zeigen:
- Fig. 1: einen schematischen Querschnitt durch einen Omnibus mit einem erfindungsgemäßen Be- und Entlüftungssystem,
- Fig. 2: eine vergrößerte Darstellung des mit Einlaßöffnungen für die Abluft versehenen Podestbereiches des Omnibusses gemäß Fig. 1,
- Fig. 3: eine Draufsicht auf den Rahmen des Luftleitelementes gemäß den Fig. 1 und 2,
- Fig. 4: den Schnitt längs der Linie IV-IV in Fig. 3,
- Fig. 5: eine Draufsicht auf das Gehäuse des Luftleitelementes gemäß den Fig. 1 und 2 und
- Fig. 6: den Schnitt längs der Linie VI-VI in Fig. 5.

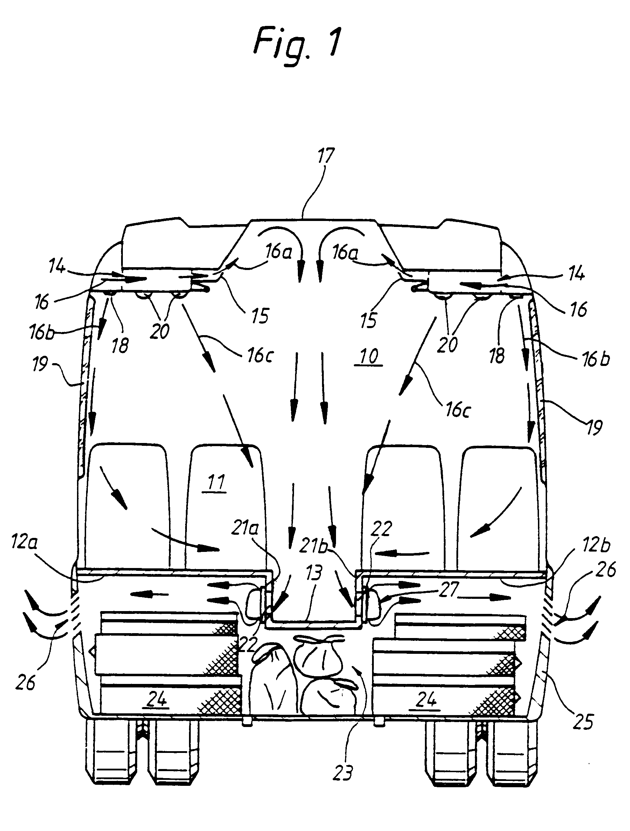

Fig. 1 zeigt im Querschnitt einen Omnibus, der einen sich in dessen Längsrichtung erstreckenden Fahrgastraum (10) besitzt, der mit in Sitzreihen angeordneten Sitzen (11) versehen ist. Die Sitze (11) sind Podestbereichen (12a, 12b) zugeordnet, die auf der linken und der rechten Seite eines Mittelganges (13) angeordnet sind. Der dargestellte Omnibus besitzt eine Be- und Entlüftungsanlage mit einem Lufteinlaßsystem (14), das im oberen Bereich des Fahrgastraumes (10) angeordnet ist. Über das Lufteinlaßsystem (14) kann Zuluft von außen in den Fahrgastraum (10) einströmen. Dem Lufteinlaßsystem (14) zugeordnete Luftführungen (15) bewirken, daß ein Teilstrom (16a) der Zuluft (16) an die Decke (17) des Fahrgastraumes (10) geleitet wird. Ein weiterer Teilstrom (16b) der Zuluft (16) strömt über Einlässe (18) an der von Fenstern (19) des Omnibusses entlang. Ein weiterer Teilstrom (16c) ist über einstellbare Düsen (20) dem Innern des Fahrgastraumes (10) zuführbar.

Die Podestbereiche (12a, 12b) besitzen jeweils eine vertikale Wandung (21a, 21b), die den Mittelgang (13) begrenzen. An den Wandungen (21a, 21b) sind mehrere mit Abstand zueinander in Längsrichtung des Omnibusses angeordnete Einlaßöffnungen (22) vorgesehen, über die die Abluft direkt aus dem Fahrgastraum (10) in einen unterhalb von diesem angeordneten Laderaum (23) abführbar ist. Der Laderaum (23) dient der Aufnahme von Gepäckstücken (24), die über an der Außenseite des Omnibusses angeordnete nicht dargestellte Laderaumklappen dem Laderaum (23) zuführbar sind. Um die Abströmung der Abluft aus dem Laderaum (23) zu gewährleisten, sind an der Außenwand (25) des Omnibusses oder an den Laderaumklappen Auslaßöffnungen (26) vorgesehen. Somit kann die Abluft aus dem Innern des Laderaumes (23) nach außen gelangen.

Eine derartige Entlüftung bewirkt eine direkte Abfuhr der Abluft. Da diese erwärmt ist, kann der Laderaum hierdurch aufgeheizt werden, was zu einer Erwärmung des Bodens des Fahrgastraumes (10) führt.

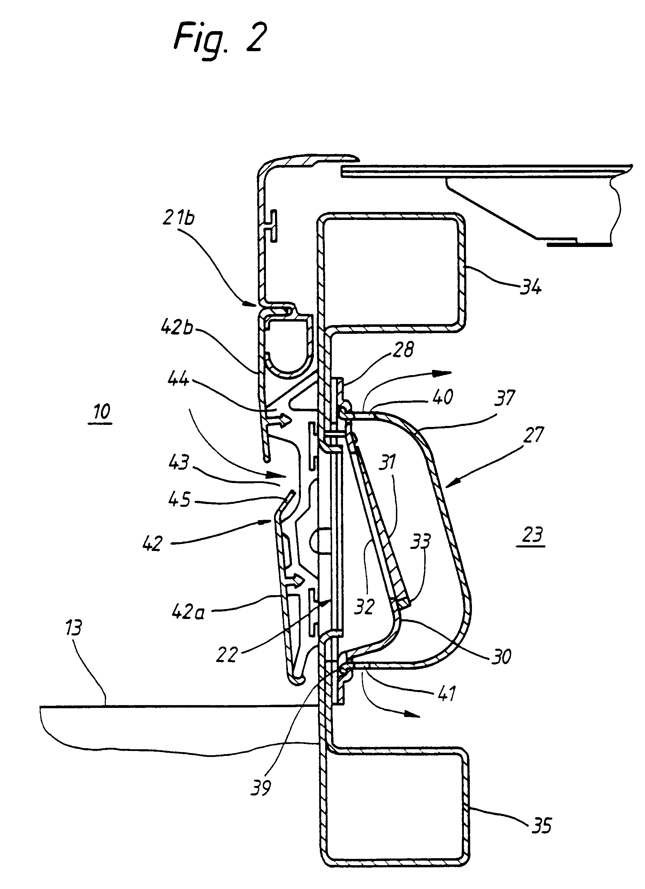

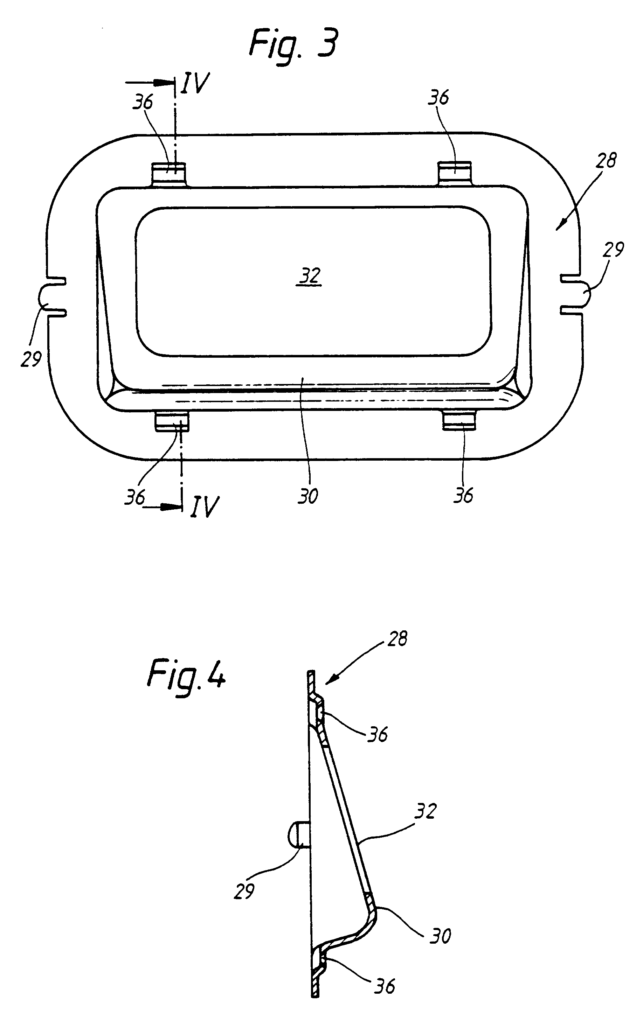

Im Bereich der Einlaßöffnungen (22) sind innerhalb des Laderaumes (23) Luftleitelemente (27) vorgesehen, die in Fig. 2 vergrößert dargestellt sind. Die Luftleitelemente (27) besitzen einen in den Fig. 3 und 4 dargestellten Rahmen (28), der als Kunststoffspritzteil hergestellt ist. Der Rahmen (28), der die Einlaßöffnung (22) umfaßt, ist an der Innenseite des Laderaumes (23) befestigt. Hierzu sind an dem Rahmen (28) elastische Klipselemente (29) vorgesehen, die in entsprechende Aufnahmen einführbar sind. An dem Rahmen (28) ist ein Klappenbereich (30) ausgebildet, der mit einem von einer Rückschlagklappe (31) verschließbaren Luftdurchlaß (32) versehen ist.

Wie aus den Fig. 2 und 4 hervorgeht, ist der Klappenbereich (30) gegenüber der Vertikalen im Gegenuhrzeigersinn schräg geneigt. Die schwenkbeweglich in einem obenliegenden Abschnitt des Klappenbereiches (30) gelagerte Rückschlagklappe (31) verschließt in ihrer Schließstellung den Luftdurchlaß (32). Der schräg ausgeführte Klappenbereich (30) gewährleistet durch die hierbei wirksame Gewichtskomponente der Rückschlagklappe (31) gute Schließeigenschaften. An der Rückschlagklappe (31) ist in deren Randbereich eine Beflockung (33) vorgesehen, die einerseits die Dichtwirkung verbessert und andererseits zur Geräuschunterdrückung beiträgt.

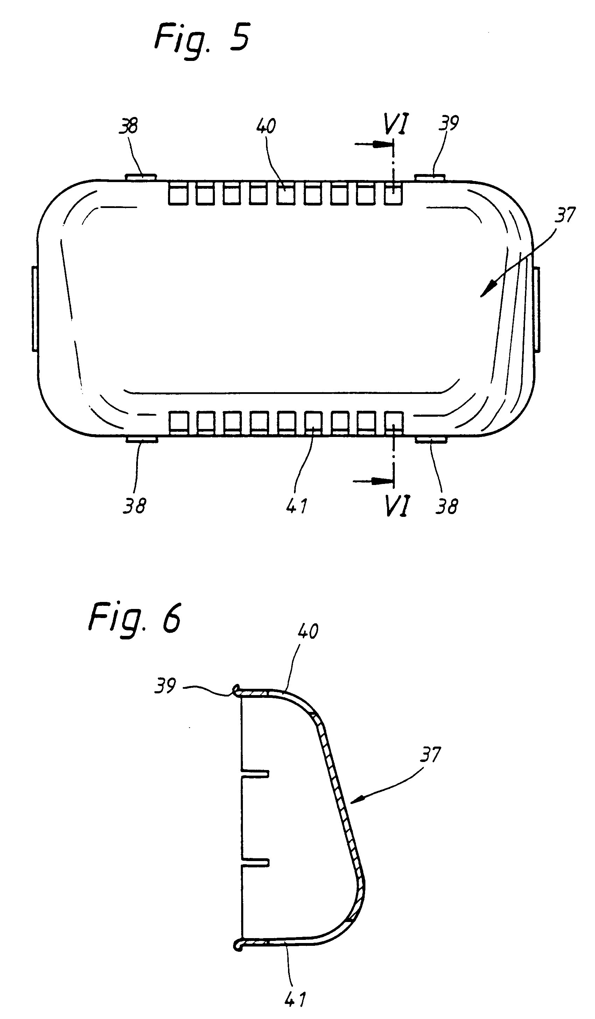

An dem Rahmen (28) der Luftleitteile (27) sind Aufnahmen (36) ausgebildet, an denen ein Gehäuse (37) festlegbar ist. Das Gehäuse (37), dessen Draufsicht in Fig. 5 dargestellt ist, besitzt hierzu Klipselemente (38), die in die entsprechenden Aufnahmen (36) des Rahmens (28) einführbar sind. Das Gehäuse (37) umfaßt den Klappenbereich (33) des Rahmens (28) mit Abstand. Somit kann die Rückschlagklappe (31) eine Schwenkbewegung im Gegenuhrzeigersinn ausführen und hierbei den Luftdurchlaß (32) öffnen. Die Ober- und die Unterseite des Gehäuses (37) ist mit Luftöffnungen (40, 41) versehen, über die die durch Pfeile dargestellte Abluft aus dem Innern des Gehäuses (37) in den Laderaum (23) entweichen kann.

Das als Abstandselement dienende Gehäuse (37) stellt sicher, daß auch bei vollbeladenem Laderaum (23) die Funktionsfähigkeit der Luftleitelemente (27) gewährleistet ist. Auch wenn Gepäckstücke (24) des Laderaumes (23) in unmittelbarer Nähe der Luftleitelemente (27) angeordnet sind, stellt das Gehäuse (37) die Funktion der Rückschlagklappe (31) sicher. Die an der Ober- und Unterseite des Gehäuses (37) angeordneten Luftöffnungen (40, 41) können nicht durch Gepäckstücke (24) zugestellt werden. Somit ist gewährleistet, daß die Abluft aus dem Laderaum (23) über die Auslaßöffnungen (26) abströmen können.

Auch im Bereich der Auslaßöffnungen (26) können, was nicht dargestellt ist, prinzipiell gleichartig ausgebildete Luftleitelemente angeordnet sein. Somit wird auch im Bereich der Auslaßöffnungen (26) bei vollbeladenem Laderaum (23) die Abluftströmung sicher gewährleistet.

Die an den Luftleitelementen (27) angeordnete Rückschlagklappe (31), die in Abluftströmung öffnet, verhindert ein Einströmen von Zuluft aus dem Laderaum (23). Sofern an den Auslaßöffnungen (26) ebenfalls Luftleitelemente angeordnet sind, was nicht dargestellt ist, wird ein Zuströmen von Außenluft verhindert.

Die Wandungen (21a, 21b) der Podestbereiche (12a, 12b) sind im Bereich der Einlaßöffnungen (22) mit einer mehrteilig ausgebildeten Blende (42) versehen (s. Fig. 2). Die mehrteilig ausgebildete Blende (42) besitzt zwei sich in Maschinenlängsrichtung erstreckende Profilteile (42a, 42b), die einen Längsschlitz (43) begrenzen. Über den Längsschlitz (43) kann die Abluft aus dem Fahrgastraum (10) über die Einlaßöffnungen (22) in den Laderaum (23) abströmen. Die Profilteile (42a, 42b) sind an Halteelementen (44) festgelegt, die mit Abstand zueinander in Längsrichtung des Omnibusses angeordnet sind. Zur Befestigung der Profilteile (42a, 42b) an den Halteelementen (44) ist eine Klipsverbindung vorgesehen.

Die Blende (42) bewirkt eine optische Kaschierung der dahinter angeordneten Einlaßöffnungen (22) zur Abführung der Abluft. Durch an dem Profilteil (42a) in dessen Randbereich ausgebildete Leitteile (45) wird außerdem eine verbesserte Luftabführung gewährleistet.

Die zwischen Längsträgern (34 und 35) des Omnibusses angeordneten Luftleitelemente (27) sind in einfacher Weise herstellbar und montierbar. Da das Gehäuse (37) der Luftleitelemente (27) lösbar festgelegt ist, sind gegebenenfalls Funktionsstörungen an der Rückschlagklappe (31) in einfacher Weise behebbar.

Außerdem können gegebenenfalls in einfacher Weise Reinigungsarbeiten durchgeführt werden.

## Patentansprüche

1. Be- und Entlüftungssystem, insbesondere für einen Omnibus, mit einem Lufteinlaßsystem (14), über das Zuluft einem Fahrgastraum (10) zuführbar ist, die über einen unterhalb des Fahrgastraumes angeordneten Laderaum (23) abströmt, wobei in den Laderaum führende Einlaßöffnungen (22) und aus dem Laderaum führende Auslaßöffnungen (26) für die Abluft vorgesehen sind,
**dadurch gekennzeichnet,**
daß den Einlaßöffnungen (22) und/oder den Auslaßöffnungen (26) Luftleitelemente (27) zugeordnet sind, die jeweils eine in Richtung der Abluftströmung öffnende Rückschlagklappe (31) und mindestens ein Abstandselement besitzen, das die Funktion der Rückschlagklappe (31) und die Abluftabführung bei vollbeladenem Laderaum sicherstellt.

2. Be- und Entlüftungssystem nach Anspruch 1,
**dadurch gekennzeichnet,**
daß die Luftleitelemente (27) innerhalb des Laderaumes (23) angeordnet sind.

3. Be- und Entlüftungssystem nach Anspruch 1 oder 2,
**dadurch gekennzeichnet,**
daß das mindestens ein Abstandselement als die Rückschlagklappe (31) umfassendes Gehäuse (37) ausgebildet ist, das mit mindestens einer Luftöffnung (40, 41) versehen ist.

4. Be- und Entlüftungssystem nach Anspruch 3,
**dadurch gekennzeichnet,**
daß die Luftöffnung (40, 41) an einer Ober- und/oder an einer Unterseite des Gehäuses (37) angeordnet ist.

5. Be- und Entlüftungssystem nach Anspruch 3 oder 4,
**dadurch gekennzeichnet,**
daß das Gehäuse (37) lösbar an einem Rahmen (28) des Luftleitelementes (27) festgelegt ist, der die Einlaßöffnung (22) oder die Auslaßöffnung (26) umfaßt.

6. Be- und Entlüftungssystem nach Anspruch 5,
**dadurch gekennzeichnet,**
daß der Rahmen (28) mit einem Klappenbereich (30) ausgebildet ist, der mit einem von der Rückschlagklappe (31) schließbaren Luftdurchlaß (32) versehen ist.

7. Be- und Entlüftungssystem nach Anspruch 6,
**dadurch gekennzeichnet,**
daß der Klappenbereich (30) gegenüber der Vertikalen schräg geneigt ausgebildet ist.

8. Be- und Entlüftungssystem nach einem der Ansprüche 1 bis 7,
**dadurch gekennzeichnet,**
daß der Rückschlagklappe (31) oder dem Klappenbereich (30) eine Dichtung zugeordnet ist.

9. Be- und Entlüftungssystem nach Anspruch 8,
**dadurch gekennzeichnet,**
daß die Rückschlagklappe (31) und/oder der Klappenbereich (30) mit einer Beflockung (33) versehen ist.

10. Be- und Entlüftungssystem nach einem der Ansprüche 1 bis 9,
**dadurch gekennzeichnet,**
daß die Einlaßöffnungen (22) mit einer im Fahrgastraum (10) angeordneten Blende (42) versehen sind.

11. Be- und Entlüftungssystem nach Anspruch 10,
**dadurch gekennzeichnet,**
daß die Blende (42) mit einem in Fahrzeuglängsrichtung verlaufenden Längsschlitz (43) ausgebildet ist.

12. Be- und Entlüftungssystem nach Anspruch 11,
**dadurch gekennzeichnet,**
daß die Blende (42) aus mehreren Profilteilen (42a, 42b) gebildet ist, die mit Halteelementen (44) im Podestbereich (12a, 12b) des Fahrgastraumes (10) befestigt sind.

## Claims

1. Aeration and deaeration system, particularly for an omnibus, with an air inflow system (14) along which incoming air can be conveyed to a passenger space (10), which flows out via a loading space (23) provided under the passenger space, there being provided inlet openings (22) leading into the loading space and outlet openings (26) leading out of the loading space for the exhaust air, characterized in that, associated with the inlet openings (22) and/or the outlet openings (26) air ducting elements (27) are mounted which have respectively a non-return valve (31) opening in the direction of the exhaust flow and at least one spacer element which ensures the function of the non-return valve (31) and the removal of exhaust air when the loading space is fully loaded.

2. Aeration and deaeration system according to claim 1, characterized in that the air ducting elements (27) are provided inside the loading space (23).

3. Aeration and deaeration system according to either claim 1 or 2, characterized in that the at least one spacer element is designed as a housing (37) containing the non-return valve (31) and is provided with at least one air opening (40, 41).

4. Aeration and deaeration system according to claim 3, characterized in that the air opening (40, 41) is mounted on an upper and/or a lower side of the housing (37).

5. Aeration and deaeration system according to either claim 3 or 4, characterized in that the housing (37) is detachably secured to a frame (28) of the air ducting element (27) which comprises the inlet opening (22) or the outlet opening (26).

6. Aeration and deaeration system according to claim 5, characterized in that the frame (28) is constructed with a valve area (30) which is provided with an air passage (32) which can be closed by the non-return valve (31).

7. Aeration and deaeration system according to claim 6, characterized in that the valve area (30) is constructed slantingly to the vertical.

8. Aeration and deaeration system according to claims 1 to 7, characterized in that a seal is associated with the non-return valve (31) or the valve area (30).

9. Aeration and deaeration system according to claim 8, characterized in that the non-return valve (31) and/or the valve area (30) is provided with a flock coating (33).

10. Aeration and deaeration system according to claims 1 to 9, characterized in that the inlet openings (22) are provided with a cover (42) mounted in the passenger space (10).

11. Aeration and deaeration system according to claim 10, characterized in that the cover (42) is designed with a longitudinal slot (43) extending in the longitudinal direction of the vehicle.

12. Aeration and deaeration system according to claim 11, characterized in that the cover (42) is formed of several profiled parts (42a, 42b) which are secured by means of holding members (44) in the platform area (12a, 12b) of the passenger space (10).

## Revendications

1. Système d'aération et de désaération, en particulier pour un autobus, avec un système d'admission d'air (14), par l'intermédiaire duquel de l'air d'amenée peut être amené à un compartiment passager (10) et s'évacuer par une enceinte de chargement (23) disposée au-dessous du compartiment à passager, des ouvertures d'admission (22) menant dans l'enceinte de chargement et des ouvertures d'évacuation (26), menant hors de l'enceinte de chargement, étant prévu pour l'air d'évacuation,
caractérisé en ce qu'aux ouvertures d'admission (22) et/ou aux ouvertures d'évacuation (26) sont associés des éléments de guidage d'air (27), comportant chacun un clapet anti-retour (31), s'ouvrant dans la direction d'écoulement d'évacuation et comportant au moins un élément d'écartement, assurant la fonction du clapet anti-retour (31) et le guidage d'évacuation de l'air d'évacuation lorsque l'enceinte de chargement est pleinement chargée.

2. Système d'aération et de désaération selon la revendication 1, caractérisé en ce que les ouvertures de guidage d'air (27) sont disposées à l'intérieur de l'enceinte de chargement (23).

3. Système d'aération et de désaération selon l'une des revendications 1 ou 2, caractérisé en ce que le au moins un élément d'écartement est réalisé sous forme de boîtier (37), entourant le clapet anti-retour (31) et pourvu d'au moins une ouverture d'air (40, 41).

4. Système d'aération et de désaération selon la revendication 3, caractérisé en ce que l'ouverture d'air (40, 41) est disposée sur une face supérieure et/ou une face inférieure du boîtier (37).

5. Système d'aération et de désaération selon l'une des revendications 3 ou 4, caractérisé en ce que le boîtier (37) est fixé amovible sur un cadre (28) de l'élément de guidage d'air (27) entourant l'ouverture d'admission (22) ou l'ouverture d'évacuation (26).

6. Système d'aération et de désaération selon la revendication 5, caractérisé en ce que le cadre (28) est réalisé avec une zone de clapet (30) pourvue d'un passage d'air (32) pouvant être obturé par le clapet anti-retour (31).

7. Système d'aération et de désaération selon la revendication 6, caractérisé en ce que la zone de clapet (30) est inclinée obliquement par rapport à la verticale.

8. Système d'aération et de désaération selon l'une des revendications 1 à 7, caractérisé en ce qu'un joint d'étanchéité est associé au clapet anti-retour (31) ou à la zone de clapet (31).

9. Système d'aération et de désaération selon la revendication 8, caractérisé en ce que le clapet anti-retour (31) et/ou la zone de clapet (30) est pourvu d'un flocage (33).

10. Système d'aération et de désaération selon l'une des revendications 1 à 9, caractérisé en ce que les ouvertures d'admission (22) sont pourvues d'un écran (42) disposé dans le compartiment passager (10).

11. Système d'aération et de désaération selon la revendication 10, caractérisé en ce que l'écran (42) est réalisé avec une fente allongée (43), s'étendant dans la direction longitudinale du véhicule.

12. Système d'aération et de désaération selon la revendication 11, caractérisé en ce que l'écran (42) est composé de plusieurs parties profilées (42a, 42b), fixées à l'aide d'éléments de maintien (44) dans la zone de plancher (12a, 12b) du compartiment passager (10).
